(19) Europäisches Patentamt
European Patent Office
Office européen des brevets

(11) **EP 4 474 350 A1**

(12) **EUROPEAN PATENT APPLICATION**
published in accordance with Art. 153(4) EPC

(43) Date of publication:
**11.12.2024 Bulletin 2024/50**

(21) Application number: **23749755.7**

(22) Date of filing: **31.01.2023**

(51) International Patent Classification (IPC):
**C01B 39/48** (2006.01)

(52) Cooperative Patent Classification (CPC):
**C01B 39/48**

(86) International application number:
**PCT/JP2023/003121**

(87) International publication number:
**WO 2023/149439 (10.08.2023 Gazette 2023/32)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **02.02.2022 JP 2022014844**

(71) Applicant: **Tosoh Corporation
Yamaguchi 746-8501 (JP)**

(72) Inventors:
• **NAKAZAWA, Naoto**
**Shunan-shi Yamaguchi 746-8501 (JP)**
• **MITSUHASHI, Ryo**
**Shunan-shi Yamaguchi 746-8501 (JP)**
• **USUI, Toyohiro**
**Shunan-shi Yamaguchi 746-8501 (JP)**

(74) Representative: **TBK
Bavariaring 4-6
80336 München (DE)**

(54) **NOVEL YFI-TYPE ZEOLITE**

(57) An object is to provide at least one of a novel method for producing a YFI-type zeolite that is simplified compared to the conventional YFI-type zeolite production methods, or a YFI-type zeolite with a novel structure that is obtained by the method.

FIG. 1

**Description**

TECHNICAL FIELD

The present disclosure relates to a YFI-type zeolite having a novel structure.

BACKGROUND ART

YFI-type zeolites are crystalline aluminosilicates and are expected to be used in various industrial fields such as adsorbents and catalysts.

Patent Document 1 describes a YFI-type zeolite production method that includes an ingredient preparation step in which a composition containing a silica source, an alkali source, water and a structure-directing agent is heated and cooled to give a precursor, and a step in which the precursor and a Y-type zeolite are mixed together and heated to crystallize a YFI-type zeolite.

PRIOR ART DOCUMENTS

PATENT DOCUMENTS

Patent Document 1: WO 2018/061827

DISCLOSURE OF INVENTION

TECHNICAL PROBLEM

The production method of Patent Document 1 is complicated due to the need of multiple steps including the ingredient preparation step and the crystallization step.

An object of the present disclosure is to provide at least one of a novel method for producing a YFI-type zeolite that is simplified compared to the conventional YFI-type zeolite production methods, or a YFI-type zeolite with a novel structure that is obtained by the method.

SOLUTION TO PROBLEM

The present inventors studied approaches to producing a YFI-type zeolite. As a result, the present inventors have found that a novel YFI-type zeolite can be obtained from specific starting materials in a simple manner compared to the conventional production methods.

Specifically, the present invention is as described in the claims, and a gist of the present disclosure is as follows.

[1] A YFI-type zeolite having at least the following powder X-ray diffraction peaks:

[Table 1]

| Lattice spacings d (Å) | Relative intensities (%) |
|---|---|
| 15.77±0.60 | 3 or more and 40 or less |
| 12.62±0.30 | 5 or more and 120 or less |
| 9.86±0.20 | 3 or more and 100 or less |
| 9.11±0.20 | 3 or more and 150 or less |
| 7.88±0.20 | 3 or more and 70 or less |
| 5.40±0.20 | 15 or more and 85 or less |
| 4.36±0.10 | 5 or more and 75 or less |
| 4.07±0.10 | More than 80 and 170 or less |
| 3.64±0.10 | 30 or more and 130 or less |
| 3.43±0.10 | 100 |

(continued)

| Lattice spacings d (Å) | Relative intensities (%) |
|---|---|
| 3.15±0.10 | 3 or more and 60 or less |
| Relative intensities are values relative to the intensity of the peak with d = 3.43±0.10 Å. | |

[2] The YFI-type zeolite according to [1], which has a median size D50 in volume particle size distribution of 10 $\mu$m or more and 500 $\mu$m or less.

[3] The YFI-type zeolite according to [1] or [2], which has a monomodal volume particle size distribution curve.

[4] The YFI-type zeolite according to [3], wherein the volume particle size distribution curve has a standard deviation of 10 $\mu$m or more and 300 $\mu$m or less.

[5] The YFI-type zeolite according to any one of [1] to [4], wherein the molar ratio of silica to alumina is 8 or more and 5000 or less.

[6] The YFI-type zeolite according to any one of [1] to [5], which contains one or more cations selected from the group of hydrogen ion ($H^+$), sodium ($Na^+$), potassium ($K^+$), ammonium ($NH_4^+$) and cesium ($Cs^+$).

[7] The YFI-type zeolite according to any one of [1] to [6], which has an average crystal size of 0.10 $\mu$m or more and 0.70 $\mu$m or less.

[8] A method for producing the YFI-type zeolite described in any one of [1] to [7], the method comprising a step of crystallizing a composition comprising at least a silica source, an alumina source, an alkali source, an organic structure-directing agent and water, the alumina source being one or more selected from the group of aluminum hydroxide, aluminum oxide, aluminum sulfate, sodium aluminate, aluminum chloride and amorphous aluminosilicate.

[9] The method for producing the YFI-type zeolite according to [8], wherein the silica source is at least one of amorphous silicic acid or amorphous aluminosilicate.

[10] The method for producing the YFI-type zeolite according to [8] or [9], wherein the alumina source is at least one of aluminum sulfate or amorphous aluminosilicate.

ADVANTAGEOUS EFFECTS OF INVENTION

The present disclosure can provide at least one of a novel method for producing a YFI-type zeolite that is simplified compared to the conventional YFI-type zeolite production methods, or a YFI-type zeolite with a novel structure that is obtained by the method.

BRIEF DESCRIPTION OF DRAWING

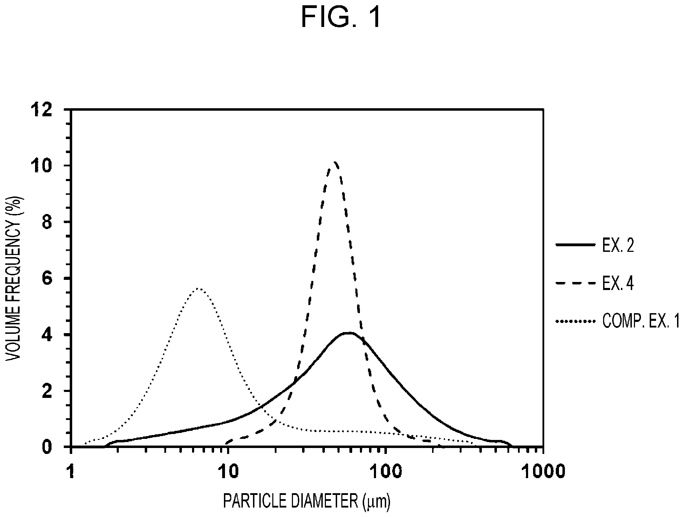

[Fig. 1] A diagram illustrating the volume frequency particle size distributions of Examples 2 and 4 and Comparative Example 1.

DESCRIPTION OF EMBODIMENTS

An exemplary embodiment of the zeolite according to the present disclosure will be described below.

The terms used in the present embodiment are defined as follows.

"Aluminosilicates" are composite oxides that have a structure consisting of a repeating network of aluminum (Al) and silicon (Si) via oxygen (O). Among the aluminosilicates, "crystalline aluminosilicates" are those having crystalline XRD peaks in a powder X-ray diffraction (hereinafter, also written as "XRD") pattern, and "amorphous aluminosilicates" are those having no crystalline XRD peaks.

In the present embodiment, XRD patterns may be obtained by XRD measurement under the following conditions.

Accelerating current/voltage: 40 mA/40 kV
Radiation source: CuK $\alpha$ ray ($\lambda$ = 1.5405 Å)
Measurement mode: Continuous scan
Scan conditions: 40°/min
Measurement time: 3 seconds
Measurement range: 2$\theta$ = 3° to 43°
Vertical divergence slit: 10 mm
Divergence/entrance slit: 1°
Light receiving slit: Open

Receiving solar slit: 5°
Detector: Semiconductor detector (D/teX Ultra)
Filter: Ni filter
An XRD pattern may be measured using a general powder X-ray diffractometer (for example, Ultima IV Protectus, manufactured by Rigaku Corporation). A crystalline XRD peak shows 2θ specified by a peak top detected in the analysis of the XRD pattern using general analysis software, and, for example, has a half width of 2θ = 0.50° or less.

A "zeolite" is a compound having a structure in which framework atoms (hereinafter, also written as "T atoms") are regularly arranged via oxygen (O). The T atoms in the compound are at least one of metal atoms or metalloid atoms. For example, the metal atoms may be of one or more selected from the group consisting of aluminum (Al), titanium (Ti), iron (Fe), zinc (Zn), gallium (Ga) and tin (Sn), with aluminum being preferable. For example, the metalloid atoms may be of one or more selected from the group of boron (B), silicon (Si), germanium (Ge), arsenic (As), antimony (Sb) and tellurium (Te), with silicon being preferable.

A "zeolite analog" is a compound having a structure in which T atoms are regularly arranged via oxygen and the T atoms include at least atoms other than metals and metalloids. Examples of the zeolite analogs include composite phosphorus compounds containing phosphorus (P) as T atoms, such as aluminophosphates (AlPO) and silicoaluminophosphates (SAPO).

The "framework structure (hereinafter, also written as the "zeolite structure")" of the zeolites and the zeolite analogs is a framework structure specified by a framework structure code according to the Structure Commission of the International Zeolite Association (hereinafter, also written simply as the "framework code"). For example, the "YFI framework structure" is a structure having the framework code YFI. The YFI zeolite framework structure can be identified by comparison to the XRD pattern described in Zeolite Framework Type YFI at the website of IZA Structure Commission (http://www.iza-struture.org/databases/) (hereinafter, this XRD pattern is also written as the "reference pattern"). Regarding the zeolite structure, the terms "framework structure", "crystal structure" and "crystalline phase" are used interchangeably.

A "zeolite slurry" is a liquid that contains a zeolite and a solvent and exhibits fluidity.

The "solid concentration" is the mass ratio of the zeolite in the zeolite slurry and is determined by the following equation.

Solid concentration (mass%)

= (mass of the zeolite (g)/mass of the zeolite slurry (g)) × 100

The mass of the zeolite slurry in the above equation is the mass obtained by mass measurement, and the mass of the zeolite is the mass of the zeolite slurry except the solvent obtained by drying the zeolite slurry after the mass measurement and treating the resultant solid at 600°C in the air atmosphere.

The YFI-type zeolite of the present embodiment will be described below.

The YFI-type zeolite of the present embodiment is a YFI-type zeolite having at least the following powder X-ray diffraction peaks. In the XRD pattern, the presence of at least the following XRD peaks shows that the YFI-type zeolite of the present embodiment has a different crystal structure from the conventional YFI-type zeolites. The YFI-type zeolite is easy to handle (has high handling properties) as compared to the conventional YFI-type zeolites and, as a result, a zeolite slurry containing this zeolite is particularly resistant to viscosity increase.

[Table 2]

| Lattice spacings d (Å) | Relative intensities (%) |
|---|---|
| 15.77±0.60 | 3 or more and 40 or less |
| 12.62±0.30 | 5 or more and 120 or less |
| 9.86±0.20 | 3 or more and 100 or less |
| 9.11±0.20 | 3 or more and 150 or less |
| 7.88±0.20 | 3 or more and 70 or less |
| 5.40±0.20 | 15 or more and 85 or less |
| 4.36±0.10 | 5 or more and 75 or less |
| 4.07±0.10 | More than 80 and 170 or less |

(continued)

| Lattice spacings d (Å) | Relative intensities (%) |
|---|---|
| 3.64±0.10 | 30 or more and 130 or less |
| 3.43±0.10 | 100 |
| 3.15±0.10 | 3 or more and 60 or less |
| Relative intensities are values relative to the intensity of the peak with d = 3.43±0.10 Å. | |

In an XRD pattern, it is not interpreted that individual XRD peaks show independent crystal structures but is understood that the whole of the XRD pattern consisting of a plurality of XRD peaks having specific relative intensities describes the YFI-type zeolite crystal structure. Changes in lattice spacing and relative intensity of XRD peaks mean that the crystal structures are different. Thus, the group of XRD peaks having the above relative intensities identifies the crystal structure of the YFI-type zeolite of the present embodiment. It should be noted that it is not easy to control the lattice spacing and the relative intensity of one XRD peak alone.

Preferably, the YFI-type zeolite of the present embodiment has at least the following XRD peaks in its XRD pattern.

[Table 3]

| Lattice spacings d (Å) | Relative intensities (%) |
|---|---|
| 15.77±0.40 | 3 or more and 30 or less |
| 12.62±0.25 | 5 or more and 90 or less |
| 9.86±0.15 | 3 or more and 70 or less |
| 9.11±0.15 | 3 or more and 120 or less |
| 7.88±0.10 | 3 or more and 60 or less |
| 5.40±0.10 | 20 or more and 80 or less |
| 4.36±0.10 | 10 or more and 60 or less |
| 4.07±0.10 | More than 80 and 150 or less |
| 3.64±0.10 | 50 or more and 120 or less |
| 3.43±0.10 | 100 |
| 3.15±0.10 | 5 or more and 50 or less |
| Relative intensities are values relative to the intensity of the peak with d = 3.43±0.10 Å. | |

More preferably, the YFI-type zeolite of the present embodiment has at least the following XRD peaks in its XRD pattern.

[Table 4]

| Lattice spacings d (Å) | Relative intensities (%) |
|---|---|
| 15.77±0.30 | 3 or more and 20 or less |
| 12.62±0.20 | 10 or more and 70 or less |
| 9.86±0.10 | 5 or more and 50 or less |
| 9.11±0.10 | 10 or more and 100 or less |
| 7.88±0.10 | 5 or more and 50 or less |
| 5.40±0.10 | 30 or more and 70 or less |
| 4.36±0.10 | 20 or more and 50 or less |
| 4.07±0.10 | More than 80 and 120 or less |
| 3.64±0.10 | 60 or more and 110 or less |

(continued)

| Lattice spacings d (Å) | Relative intensities (%) |
|---|---|
| 3.43±0.10 | 100 |
| 3.15±0.10 | 10 or more and 40 or less |
| Relative intensities are values relative to the intensity of the peak with d = 3.43±0.10 Å. | |

Still more preferably, the YFI-type zeolite of the present embodiment has at least the following XRD peaks in its XRD pattern.

[Table 5]

| Lattice spacings d (Å) | Relative intensities (%) |
|---|---|
| 15.77±0.18 | 3 or more and 10 or less |
| 12.62±0.12 | 20 or more and 65 or less |
| 9.86±0.10 | 10 or more and 50 or less |
| 9.11±0.10 | 10 or more and 100 or less |
| 7.88±0.10 | 15 or more and 40 or less |
| 5.40±0.10 | 40 or more and 50 or less |
| 4.36±0.10 | 25 or more and 35 or less |
| 4.07±0.10 | More than 80 and 90 or less |
| 3.64±0.10 | 75 or more and 95 or less |
| 3.43±0.10 | 100 |
| 3.15±0.10 | 20 or more and 30 or less |
| Relative intensities are values relative to the intensity of the peak with d = 3.43±0.10 Å. | |

The XRD pattern of the YFI-type zeolite of the present embodiment may include other XRD peaks assigned to the YFI-type zeolite in addition to the XRD peaks described above. Because the crystal structure identification does not need to take into consideration XRD peaks with a relative intensity of less than 3%, the XRD pattern of the YFI-type zeolite of the present embodiment may include XRD peaks with a relative intensity of less than 3%.

In the cumulative volume particle size distribution of the YFI-type zeolite of the present embodiment, the median size D50 (hereinafter, also written as the "median size") is preferably 10 μm or more and 500 μm or less. In order to ensure that a zeolite slurry containing the YFI-type zeolite will have a low viscosity, the median size may be 15 μm or more, or 20 μm or more, and may be 300 μm or less, 150 μm or less, or 80 μm or less. The median size may be more preferably 15 μm or more and 300 μm or less, or 20 μm or more and 80 μm or less.

The YFI-type zeolite of the present embodiment preferably has a monomodal volume frequency particle size distribution curve. The "monomodal volume frequency particle size distribution curve" means that the volume frequency particle size distribution curve has a shape with one peak, and preferably means that the frequency of particle diameter has a single inflection point on the volume frequency particle size distribution curve.

In the volume frequency particle size distribution of the YFI-type zeolite of the present embodiment, the mode particle size may be 25 μm or more and 500 μm or less, preferably 30 μm or more and 300 μm or less. The "mode particle size" is the particle diameter that has the highest frequency in the volume frequency particle size distribution, and is preferably the particle diameter corresponding to the peak top of the peak of the volume frequency particle size distribution curve. When the mode particle size is in the above range, the zeolite slurry tends to have a low viscosity in a wide range of shear rates. The mode particle size is one of the indices indicating the state of aggregation of primary particles, and is preferably 30 μm or more and 80 μm or less, more preferably 30 μm or more and 60 μm or less, and still more preferably 35 μm or more and 55 μm or less.

The standard deviation in the volume frequency particle size distribution of the YFI-type zeolite of the present embodiment is preferably 10 μm or more and 300 μm or less, more preferably 15 μm or more and 150 μm or less, still more preferably 15 μm or more and 55 μm or less, and further preferably 15 μm 30 μm or less. When this standard deviation is satisfied, the zeolite slurry is resistant to viscosity increase and tends to have excellent handleability.

The cumulative volume particle size distribution and the median size, as well as the volume frequency particle size distribution, the mode particle size and the standard deviation may be determined by a laser diffraction/scattering method. The measurement may be performed using a general laser diffraction/scattering particle size distribution analyzer (for example, Microtrac MT3300EXII, manufactured by MicrotracBell). The measurement conditions may be as follows.

Measurement range: 0.02 to 2000 $\mu$m
Particle refractive index: 1.66
Particle transmissivity: transmissive
Particle shape: non-spherical
Solvent refractive index: 1.333

In the YFI-type zeolite of the present embodiment, the molar ratio of silica to alumina (hereinafter, also written as the "SiO$_2$/Al$_2$O$_3$ ratio") is preferably 8 or more and 5000 or less, and may be 10 or more or 12 or more and may be 500 or less or 100 or less. For example, the SiO$_2$/Al$_2$O$_3$ ratio is more preferably 15 or more and 60 or less, or 17 or more and 50 or less.

The YFI-type zeolite of the present embodiment is preferably a crystalline aluminosilicate. In this case, the zeolite may contain T atoms other than Si and Al. For example, the T atoms that constitute the YFI-type zeolite of the present embodiment may be of one or more selected from the group of boron (B), gallium (Ga), germanium (Ge), iron (Fe), titanium (Ti) and tin (Sn). The zeolite containing such atoms is a so-called metal-substituted YFI-type zeolite (a metal-substituted YFI-type zeolite, a metal-substituted YFI-type crystalline aluminosilicate).

The YFI-type zeolite of the present embodiment may contain cations (M) in addition to the T atoms, and preferably contains cations that can be replaced by other cations through ion exchange. The cations (M) occupy places not occupied by the T atoms and may occupy at least one of pores or ion-exchangeable sites, or may occupy ion-exchangeable sites.

The cations contained in the YFI-type zeolite of the present embodiment may be of one or more selected from the group of potassium (K$^+$), sodium (Na$^+$), hydrogen ion (H$^+$), ammonium (NH$_4^+$), lithium (Li$^+$), rubidium (Rb$^+$), cesium (Cs$^+$), magnesium (Mg$^{2+}$), calcium (Ca$^{2+}$), strontium (Sr$^{2+}$), barium (Ba$^{2+}$) and zinc (Zn$^{2+}$). One or more selected from the group of potassium, sodium, hydrogen ion, ammonium and cesium are preferable. One or more selected from the group of hydrogen ion, ammonium and cesium are more preferable.

Usually, a YFI-type zeolite is crystallized from a composition including an organic structure-directing agent (hereinafter, also written as the "SDA") that directs the synthesis towards a YFI-type zeolite. Thus, the YFI-type zeolite of the present embodiment may contain SDA or further YFI-directing SDA. On the other hand, the YFI-type zeolite of the present embodiment may be free from SDA, in which case the pore volume will be increased. For example, the SDA that directs the synthesis toward a YFI-type zeolite may be preferably dimethyldipropylammonium cation (hereinafter, also written as "DMDPA$^+$"). When SDA is used, the YFI-type zeolite mainly contains the SDA in its pores.

When the YFI-type zeolite of the present embodiment contains SDA, it is more preferable that the XRD pattern of the zeolite have at least the following XRD peaks.

[Table 6]

| Lattice spacings d (Å) | Relative intensities (%) |
|---|---|
| 15.77±0.60 | 3 or more and 30 or less |
| 12.62±0.30 | 5 or more and 60 or less |
| 9.86±0.20 | 3 or more and 50 or less |
| 9.11±0.20 | 3 or more and 70 or less |
| 7.88±0.20 | 3 or more and 40 or less |
| 5.40±0.20 | 15 or more and 70 or less |
| 4.36±0.10 | 5 or more and 50 or less |
| 4.07±0.10 | More than 80 and 170 or less |
| 3.64±0.10 | 50 or more and 130 or less |
| 3.43±0.10 | 100 |
| 3.15±0.10 | 10 or more and 50 or less |
| Relative intensities are values relative to the intensity of the peak with d = 3.43±0.10 Å. | |

The average crystal size of the YFI-type zeolite of the present embodiment may be 0.1 $\mu$m or more, 0.2 $\mu$m or

more, or 0.3 μm or more, and may be 0.7 μm or less, 0.65 μm or less, or 0.60 μm or less. When the YFI-type zeolite has the above average crystal size, a zeolite slurry of the YFI-type zeolite tends to exhibit a low viscosity even when the shear rate is varied. Preferably, the average crystal grain size may be 0.1 μm or more and 0.7 μm or less, may be 0.2 μm or more and 0.6 μm or less, or may be 0.3 μm or more and 0.6 μm or less.

In the present embodiment, the "average crystal size" is the average of the particle diameters of primary particles. The primary particles are particles that are observed as independent minimum units with a scanning electron microscope (hereinafter, also written as "SEM") under conditions below. SEM observation may be made using a general scanning electron microscope (for example, device name: JSM-IT200, manufactured by JEOL Ltd.).

Accelerating voltage: 6 mV
Magnification: 15,000 ± 5,000 times

The determination of the average crystal size starts with extracting 100 ± 5 primary particles that show their outlines without interruption in the SEM image. The longest axis and the shortest axis of the extracted primary particle are measured, and the results are averaged (= (longest axis [μm] + shortest axis [μm]) ÷ 2) to give the crystal size of that primary particle. Next, the average of the crystal sizes of the primary particles is obtained as the average crystal size. One or more SEM images that allow for observation of the above number of primary particles are used.

The YFI-type zeolite of the present embodiment may be used in known zeolite applications and may be used as, for example, catalysts, adsorbents and carriers for these. When the YFI-type zeolite of the present embodiment is used in at least one of catalyst application or adsorbent application, the zeolite may contain a transition metal. The transition metal contained in the YFI-type zeolite of the present embodiment may be preferably one or more selected from the group of Groups 8, 9, 10 and 11 of the periodic table, more preferably one or more selected from the group of platinum (Pt), palladium (Pd), rhodium (Rh), silver (Ag), iron (Fe), copper (Cu), cobalt (Co), manganese (Mn) and indium (In), still more preferably at least one of iron or copper, and further preferably copper.

The YFI-type zeolite of the present embodiment may be used in any shape in accordance with the application, such as, for example, powder, slurry, shaped body, or adsorbent member. Specifically, the shape of the shaped bodies may be one or more selected from the group of spherical, substantially spherical, elliptical, disks, cylindrical, polyhedral, irregular and petals.

When the YFI-type zeolite of the present embodiment is formed into a slurry, the dispersion medium may be at least one of water or an organic solvent. For example, the dispersion medium may be one or more selected from the group of water, acetone, ethanol, methanol and isopropyl alcohol. Water is preferable. In order to satisfy both fluidity and high solid concentration, the solid concentration of the slurry may be, for example, 0.01 mass% or more, 10 mass% or more, or 25 mass% or more, and 60 mass% or less, 45 mass% or less, or 35 mass% or less, and is preferably 0.01 mass% or more and 60 mass% or less, 10 mass% or more and 45 mass% or less, or 25 mass% or more and 35 mass% or less.

Next, a method for producing the YFI-type zeolite of the present embodiment will be described.

A production method of the present embodiment comprises a step of crystallizing a composition comprising at least a silica source, an alumina source, an alkali source, an organic structure-directing agent and water (hereinafter, the composition is also written as the "raw composition") (hereinafter, the step is also written as the "crystallization step"). In the YFI-type zeolite production method, the alumina source is one or more selected from the group of aluminum hydroxide, aluminum oxide, aluminum sulfate, sodium aluminate, aluminum chloride and amorphous aluminosilicate. Through the crystallization step, the YFI-type zeolite of the present embodiment is crystallized from the raw composition.

The silica source is at least one of a silicon-containing compound or silicon (Si). For example, the silica source may be one or more selected from the group of silica sol, fumed silica, colloidal silica, precipitated silica, sodium silicate, potassium silicate, amorphous silicic acid, crystalline aluminosilicate and amorphous aluminosilicate. The silica source is preferably at least one of amorphous silicic acid or amorphous aluminosilicate.

The alumina source is one or more selected from the group of aluminum hydroxide, aluminum oxide, aluminum sulfate, sodium aluminate, aluminum chloride and amorphous aluminosilicate. Alumina sources other than those described above are expensive and raise the production cost, or do not allow for the crystallization of the YFI-type zeolite within a crystallization time applicable to industrial production processes. From the point of view of production cost, for example, from the point of view of shortening the crystallization time, the alumina source is preferably one or more selected from the group of aluminum hydroxide, aluminum oxide, aluminum sulfate, sodium aluminate, aluminum chloride and amorphous aluminosilicate, and more preferably one or more selected from the group of aluminum oxide, aluminum sulfate, sodium aluminate and amorphous aluminosilicate. From the point of view of reactivity, the alumina source is still more preferably at least one of aluminum sulfate or amorphous aluminosilicate.

Particularly preferably, the alumina source and the silica source may be at least either of amorphous silica and aluminum sulfate, or amorphous aluminosilicate. The $SiO_2/Al_2O_3$ ratio in the amorphous aluminosilicate may be 10 or more, 15 or more or 20 or more and may be 10000 or less, 1000 or less or 80 or less, and is preferably 10 or more and 10000 or less, 15 or more and 1000 or less , or 20 or more and 80 or less. Furthermore, the raw composition preferably does not include an FAU-type zeolite, and particularly preferably does not include an FAU-type zeolite as an alumina source and a silica source.

The SDA may be any cation that directs the synthesis toward a YFI-type zeolite, and is preferably DMDPA$^+$.

The SDA may be contained as a salt in the raw composition. The SDA salt may be one or more selected from the group of hydroxides, fluorides, chlorides, bromides, iodides, carbonates and sulfates of SDA, may be preferably one or more selected from the group of hydroxides, chlorides and bromides of SDA, and may be more preferably a hydroxide of SDA.

To save the production cost, the SDA salt is preferably one or more selected from the group of dimethyldipropylammonium hydroxide, dimethyldipropylammonium bromide and dimethyldipropylammonium chloride, and is more preferably dimethyldipropylammonium hydroxide (hereinafter, also written as "DMDPAOH").

The alkali source is at least one of alkali metals or compounds containing an alkali metal element. The alkali source may be one or more selected from the group of hydroxides, carbonates, sulfates, chlorides, bromides, silicates and iodides of alkali metals, is preferably one or more selected from the group of hydroxides, chlorides, bromides and iodides of alkali metals, and is more preferably an alkali metal hydroxide.

The alkali metal element may be one or more selected from the group of sodium, potassium, rubidium and cesium, is preferably at least one of sodium or potassium, and is more preferably potassium.

When any starting material is also capable of serving as another starting material, the starting material may be regarded as all of such starting materials. When, for example, the alumina source is a compound containing silica, the compound is regarded as both an alumina source and a silica source.

The water may be one or more selected from the group of distilled water, deionized water and pure water. Furthermore, water coming from other starting materials for the raw composition, such as a solvent and a hydrous compound, is also regarded as water in the raw composition.

In order to save the raw material costs, the raw composition does not necessarily contain a seed crystal. In order to shorten the treatment time required for the crystallization, the raw composition may contain a seed crystal in an amount that is sufficiently small relative to the silica source and the alumina source.

The seed crystal may be a zeolite other than FAU-type zeolite. For example, the seed crystal may be at least one or more selected from the group of AEI-type zeolite, AFI-type zeolite, AFT-type zeolite, AFV-type zeolite, AFX-type zeolite, *BEA-type zeolite, CHA-type zeolite, CON-type zeolite, EAB-type zeolite, EMT-type zeolite, ERI-type zeolite, FER-type zeolite, GIS-type zeolite, GME-type zeolite, HEU-type zeolite, KFI-type zeolite, LEV-type zeolite, LTL-type zeolite, MAZ-type zeolite, MER-type zeolite, MOR-type zeolite, MSE-type zeolite, OFF-type zeolite and YFI-type zeolite. The seed crystal is preferably one or more selected from the group of CHA-type zeolite, MOR-type zeolite and YFI-type zeolite, and is preferably a YFI-type zeolite.

The seed crystal contained in the raw composition may represent 0 mass% or more or 1 mass% or more, and 20 mass% or less or 10 mass% or less in terms of the total mass of aluminum and silicon in the seed crystal converted to $Al_2O_3$ and $SiO_2$, respectively (hereinafter, the total mass is also written as the "seed crystal content") relative to the total mass of aluminum and silicon in the raw composition (except the seed crystal) converted to $Al_2O_3$ and $SiO_2$, respectively. Preferably, for example, the seed crystal content may be 0 mass% or more and 20 mass% or less, may be more than 0 mass% and 20 mass% or less, or may be 1 mass% or more and 10 mass% or less.

Some preferred molar ratios in the raw composition are described below. In the following, Metal is an alkali metal other than potassium. When the raw composition includes two or more kinds of alkali metals other than potassium (for example, sodium and cesium), Metal/$SiO_2$ ratio may be translated to (Na + Cs)/$SiO_2$. The same applies to other alkali metals.

$SiO_2$/$Al_2O_3$ ratio = 10 or more, 15 or more, or 20 or more and
200 or less, 100 or less, or 60 or less
SDA/$SiO_2$ ratio = 0.01 or more, 0.02 or more, or 0.04 or more and
0.80 or less, 0.40 or less, or 0.20 or less
K/$SiO_2$ ratio = 0.05 or more, 0.15 or more, or 0.30 or more and
1.50 or less, 0.90 or less, or 0.70 or less
Metal/$SiO_2$ ratio = 0.00 or more, 0.05 or more, or 0.10 or more and
1.00 or less, 0.70 or less, or 0.30 or less
OH/$SiO_2$ ratio = 0.10 or more, 0.18 or more, or 0.25 or more and
1.50 or less, 1.00 or less, or 0.80 or less
$H_2O$/$SiO_2$ ratio = 2 or more, 6 or more, 8 or more, or 10 or more and
800 or less, 300 or less, 100 or less, or 60 or less

Some particularly preferred molar ratios in the raw composition are described below.

SiO$_2$/Al$_2$O$_3$ ratio = 20 or more and 60 or less,
preferably 20 or more and 50 or less
SDA/SiO$_2$ ratio = 0.02 or more and 0.20 or less,
preferably 0.05 or more and 0.15 or less
K/SiO$_2$ ratio = 0.2 or more and 0.7 or less,
preferably 0.3 or more and 0.6 or less
Metal/SiO$_2$ ratio = 0.00 or more and 0.30 or less,
preferably 0 or more and 0.01 or less
OH/SiO$_2$ ratio = 0.25 or more and 0.80 or less,
preferably 0.3 or more and 0.1 or less
H$_2$O/SiO$_2$ ratio = 5 or more and 60 or less,
preferably 8 or more and 15 or less

In the crystallization step, the raw composition is crystallized. The crystallization is preferably performed by hydrothermal synthesis. The crystallization temperature may be any temperature that allows to proceed the crystallization of the YFI-type zeolite, and is preferably 100°C or above, 130°C or above, or 150°C or above. It is not necessary that the crystallization temperature be higher than needed. For example, the crystallization temperature may be 200°C or below, or 180°C or below, and is preferably 100°C or above and 200°C or below, or 150°C or above and 180°C or below. In the crystallization, the raw composition may be stirred or allowed to stand still, and is preferably stirred. The stirring speed may be controlled appropriately in accordance with the scale and the structure of the device used for the crystallization. For example, the stirring speed may be 30 rpm or more and 300 rpm or less, or may be 40 pm or more and 250 rpm or less.

The time of the crystallization step may be controlled in accordance with the amount of the raw composition to be crystallized and the crystallization temperature. For example, the crystallization time applicable to industry may be 5 hours or more, or 10 hours or more, and may be 300 hours or less, 200 hours or less, or 100 hours or less. For example, the crystallization time may be 5 hours or more and 300 hours or less, or may be 10 hours or more and 50 hours or less.

After the crystallization step, the production method of the present embodiment may comprise one or more selected from the group of a washing step, a drying step, an SDA removal step, an acid treatment step and a cation exchange step.

In the washing step, the zeolite and the liquid phase are separated by solid-liquid separation. In the washing step, the solid-liquid separation may be performed by a known method, and the zeolite obtained as a solid phase may be washed with pure water.

In the drying step, the moisture physically adsorbed on the zeolite is removed. The drying conditions are not limited. For example, the zeolite may be dried by being allowed to stand in the air atmosphere at 50°C or above and 250°C or below for 1 hour or more and 120 hours or less, or may be dried with a spray dryer.

The SDA removal step removes the SDA from the zeolite. For example, the SDA removing technique may be one or more selected from the group of liquid-phase treatment with an acidic aqueous solution, exchange treatment with a resin, thermal decomposition treatment and calcination treatment. From the point of view of production efficiency, the SDA removal step is preferably at least one of thermal decomposition treatment or calcination treatment. In the calcination treatment, the calcination conditions may be controlled appropriately in accordance with the amount of the zeolite to be treated. For example, calcination may be performed in the air atmosphere at 400°C or above and 700°C or below for 1 hour or more and 24 hours or less.

The acid treatment step removes Al from the zeolite and can thereby increase the SiO$_2$/Al$_2$O$_3$ molar ratio in the zeolite. Specifically, the acid treatment may be such that the zeolite is treated with at least one of hydrochloric acid, sulfuric acid or nitric acid at 20°C or above and 100°C or below. The acid treatment is preferably such that the zeolite is mixed with hydrochloric acid and the mixture is stirred at 20°C or above and 100°C or below, or 90°C or below. The solid concentration in the zeolite slurry containing the zeolite and the acid is not limited but is preferably 5 mass% or more, 10 mass% or more, or 15 mass% or more and 45 mass% or less, 40 mass% or less, or 35 mass% or less. The acid concentration is not limited but may be 0.1 mol/L or more and 10 mol/L or less. The acid treatment step may be performed multiple times.

In the cation substitution step, any cations other than the T atoms may be introduced by, for example, removing the alkali metal contained in ion-exchangeable sites or pores in the YFI-type zeolite. For example, the cation substitution technique may be one or more selected from the group of liquid-phase treatment with an electrolyte solution, exchange treatment with a resin, thermal decomposition treatment and calcination treatment. When the cations that are introduced are hydrogen ions, the substitution may be made by at least one of treating the YFI-type zeolite with an acid or treating the YFI-type zeolite with an ammonium (NH$_4$$^+$)-containing compound followed by heat treatment.

When the cations that are introduced are NH$_4$$^+$, the substitution may be made by liquid-phase treatment with an electrolyte solution (for example, an aqueous ammonium chloride solution).

When the cations that are introduced are any metal cations, the substitution may be made by bringing a metal cation source into contact with the YFI-type zeolite that has been substituted by either hydrogen or ammonium.

The metal cation source may be any compound containing the desired metal cation. For example, the metal cation source may be one or more selected from the group of compounds containing one or more cations selected from the group of potassium, sodium, lithium, rubidium, cesium, magnesium, calcium, strontium, barium, zinc, copper, iron and silver, inorganic acid salts containing these cations, and further sulfates, nitrates, acetates, hydroxides and chlorides containing these cations.

The metal cation source and the zeolite may be brought into contact with each other in any manner at least as long as the metal cations are introduced into ion-exchangeable sites in the YFI-type zeolite. Specifically, one or more techniques may be selected from the group of ion exchange, evaporation to dryness and incipient wetness impregnation. Incipient wetness impregnation is preferable, and mixing of an aqueous solution of the metal compound with the YFI-type zeolite is further preferable. In this manner, a YFI-type zeolite is obtained that contains the metal in places not occupied by the T atoms in the YFI-type zeolite, for example, one or more selected from the group of ion-exchangeable sites, the inside of pores and the outer surface (hereinafter, such zeolite will be also written as the "metal-containing YFI-type zeolite"). Preferably, the metal is supported on the YFI-type zeolite (hereinafter, such zeolite will be also written as the "metal-bearing YFI-type zeolite").

The cation-substituted YFI-type zeolite may be washed. The purpose of washing is to remove impurities and the like contained in the cation-substituted YFI-type zeolite. The washing method is not limited. For example, the metal-containing zeolite may be washed with a sufficient amount of pure water.

In order to remove water, such as adsorbed water, remaining in the metal-containing YFI-type zeolite, the metal-containing YFI-type zeolite after washing may be treated in the air atmosphere at 100°C or above and 200°C or below, preferably 110°C or above and 190°C or below, for 1 hour or more and 24 hours or less.

In order to remove impurities such as organic matter from the metal-containing YFI-type zeolite, the zeolite may be heat-treated. The heat treatment may be performed in the air atmosphere at 200°C or above and 600°C or below for 1 hour or more and 10 hours or less, or may be performed in the air atmosphere at 300°C or above and 600°C or below for 1 hour or more and 5 hours or less.

EXAMPLES

The present disclosure will be described based on Examples below. However, the present disclosure is not limited to those Examples.

(Identification of crystalline phase)

A sample exposed to the air atmosphere for at least 5 minutes was subjected to XRD measurement using a general powder X-ray diffractometer (device name: Ultima IV Protectus, manufactured by Rigaku Corporation). The measurement conditions are as follows.

Accelerating current/voltage: 40 mA/40 kV
Radiation source: CuK$\alpha$ ray ($\lambda$ = 1.5405 Å)
Measurement mode: Continuous scan
Scan conditions: 40°/min
Measurement time: 3 seconds
Measurement range: 2$\theta$ = 3° to 43°
Vertical divergence slit: 10 mm
Divergence/entrance slit: 1°
Light receiving slit: Open
Receiving solar slit: 5°
Detector: Semiconductor detector (D/teX Ultra)
Filter: Ni filter

The XRD pattern obtained was compared to the XRD pattern described in Zeolite Framework Type YFI at the website of IZA Structure Commission (http://www.iza-struture.org/databases/) and thereby the crystalline phase of the sample was identified.

(Composition analysis)

The sample was dissolved into a mixed aqueous solution of hydrofluoric acid and nitric acid to give a sample solution. The sample solution was analyzed by inductively coupled plasma atomic emission spectroscopy (ICP-AES) using a general ICP device (device name: OPTIMA5300DV, manufactured by PerkinElmer). From the measured values of Si, Al and Cs, the $SiO_2/Al_2O_3$ ratio and the $Cs_2O/Al_2O_3$ ratio in the sample were determined.

(Volume particle size distribution)

The volume particle size distribution was determined by measuring a frequency curve and a cumulative curve of the volume particle size distribution using a laser diffraction/scattering particle size distribution analyzer (device name: Microtrac MT3300EXII, manufactured by MicrotracBell). The measurement conditions are as follows.
Measurement range: 0.02 to 2000 $\mu$m
Particle refractive index: 1.66
Particle transmissivity: transmissive
Particle shape: non-spherical
Solvent refractive index: 1.333
Ultrasonic pretreatment: no

The median size was obtained from the cumulative volume particle size distribution, and the standard deviation and the mode particle size were determined from the volume frequency particle size distribution. Furthermore, whether the volume frequency particle size distribution curve was monomodal was determined.

(Average crystal size)

SEM observation was made under the conditions below using a general scanning electron microscope (device name: JSM-IT200, manufactured by JEOL Ltd.).
Accelerating voltage: 6 mV
Magnification: 15,000 $\pm$ 5,000 times

The determination of the average crystal size started with extracting 100 $\pm$ 5 primary particles that showed their outlines without interruption in the SEM image. The longest axis and the shortest axis of the extracted primary particle were measured, and the results were averaged (= (longest axis [$\mu$m] + shortest axis [$\mu$m]) $\div$ 2) to give the crystal size of that primary particle. Next, the average of the crystal sizes of the primary particles was obtained as the average crystal size.

(Solid concentration)

The solid concentration was determined using the equation described hereinabove. The mass of the zeolite was the mass of a solid obtained by drying 3 g of the zeolite slurry in the air atmosphere at 110°C for 1 hour and treating the resultant solid in the air atmosphere at 600°C for 30 minutes.

Example 1

DMDPAOH, pure water, potassium hydroxide, aluminum sulfate and amorphous silicic acid (product name: Nipsil LP, manufactured by TOSOH SILICA CORPORATION) were mixed to give a raw composition having the following molar ratios.
$SiO_2/Al_2O_3$ ratio = 36
$K/SiO_2$ ratio = 0.44
$M/SiO_2$ ratio = 0.00
$DMDPA^+/SiO_2$ ratio = 0.120
$H_2O/SiO_2$ ratio = 11
$OH/SiO_2$ ratio = 0.40

A seed crystal (a YFI-type zeolite) was mixed with the raw composition so that the seed crystal content would be 4.0 mass%. The raw composition was then loaded into a hermetic container. While performing stirring at 55 rpm, the composition was hydrothermally treated at autogenous pressure and 170°C for 36 hours to give a crystallized product.

The resultant crystallized product was recovered by solid-liquid separation, washed with pure water and dried at 110°C in the air atmosphere. A YFI-type zeolite having a $SiO_2/Al_2O_3$ ratio of 20.2 and an average crystal size of 0.45 $\mu$m and containing potassium and $DMDPA^+$ was thus obtained as the YFI-type zeolite of this Example.

The XRD pattern of the YFI-type zeolite of this Example had the following XRD peaks with a relative intensity of 3% or more.

[Table 7]

| Lattice spacings d (Å) | Relative intensities (%) |
|---|---|
| 15.71 | 7.2 |
| 12.62 | 40.8 |
| 9.86 | 27.7 |
| 9.11 | 46.3 |
| 7.87 | 15.9 |
| 5.39 | 51.7 |
| 4.35 | 36.5 |
| 4.06 | 94.2 |
| 3.63 | 93.1 |
| 3.43 | 100 |
| 3.15 | 25.9 |
| Relative intensities are values relative to the intensity of the peak with d = 3.43 Å. | |

Example 2

A YFI-type zeolite obtained in the same manner as in Example 1 was calcined in the air atmosphere at 550°C for 2 hours to remove $DMDPA^+$. A YFI-type zeolite of this Example was thus obtained.

The YFI-type zeolite of this Example was a YFI-type zeolite that had a $SiO_2/Al_2O_3$ ratio of 20.2, a median size of 48.5 $\mu$m, a standard deviation of 49.2 $\mu$m, a monomodal volume frequency particle size distribution curve, a mode particle size of 57.0 $\mu$m and an average crystal size of 0.45 $\mu$m and contained hydrogen ions and potassium. The XRD pattern of the YFI-type zeolite of this Example had the following XRD peaks with a relative intensity of 3% or more.

[Table 8]

| Lattice spacings d (Å) | Relative intensities (%) |
|---|---|
| 15.77 | 7.1 |
| 12.58 | 46.2 |
| 9.86 | 30.0 |
| 9.11 | 43.7 |
| 7.88 | 30.9 |
| 5.39 | 50.8 |
| 4.35 | 31.3 |
| 4.06 | 88.5 |
| 3.63 | 80.7 |
| 3.43 | 100 |

(continued)

| Lattice spacings d (Å) | Relative intensities (%) |
|---|---|
| 3.14 | 28.2 |
| Relative intensities are values relative to the intensity of the peak with d = 3.43 Å. | |

Example 3

DMDPAOH, pure water, potassium hydroxide, and amorphous aluminosilicate having a $SiO_2/Al_2O_3$ ratio of 35 were mixed together to give a raw composition having the following molar ratios.
$SiO_2/Al_2O_3$ ratio = 35
$K/SiO_2$ ratio = 0.38
$M/SiO_2$ ratio = 0.00
$DMDPA^+/SiO_2$ ratio = 0.08
$H_2O/SiO_2$ ratio = 11
$OH/SiO_2$ ratio = 0.46

A seed crystal (a YFI-type zeolite) was mixed with the raw composition so that the seed crystal content would be 4.0 mass%. The raw composition was then loaded into a hermetic container. While performing stirring at 251 rpm, the composition was hydrothermally treated at 170°C for 36 hours to give a crystallized product.
The resultant crystallized product was recovered by solid-liquid separation, washed with pure water and dried at 110°C in the air atmosphere. A YFI-type zeolite having a $SiO_2/Al_2O_3$ ratio of 17.3 and an average crystal size of 0.49 $\mu$m and containing potassium and $DMDPA^+$ was thus obtained as the YFI-type zeolite of this Example. The XRD pattern of the YFI-type zeolite of this Example had the following XRD peaks with a relative intensity of 3% or more.

[Table 9]

| Lattice spacings d (Å) | Relative intensities (%) |
|---|---|
| 15.77 | 6.2 |
| 12.65 | 41.1 |
| 9.88 | 30.0 |
| 9.13 | 43.1 |
| 7.88 | 15.0 |
| 5.40 | 48.7 |
| 4.35 | 39.3 |
| 4.07 | 106.6 |
| 3.64 | 95.0 |
| 3.43 | 100 |
| 3.15 | 25.7 |
| Relative intensities are values relative to the intensity of the peak with d = 3.43 Å. | |

Example 4

A YFI-type zeolite obtained in the same manner as in Example 3 was calcined in the air atmosphere at 550°C for 2 hours to give a YFI-type zeolite (a calcined YFI-type zeolite) of this Example.
The YFI-type zeolite of this Example was a YFI-type zeolite that had a $SiO_2/Al_2O_3$ ratio of 17.3, a median size of 57.8 $\mu$m, a standard deviation of 17.8 $\mu$m, a monomodal volume frequency particle size distribution curve, a mode particle size of 47.0 $\mu$m and an average crystal size of 0.49 $\mu$m and contained hydrogen ions and potassium. The XRD pattern of the YFI-type zeolite of this Example had the following XRD peaks with a relative intensity of 3% or more.

[Table 10]

| Lattice spacings d (Å) | Relative intensities (%) |
|---|---|
| 15.77 | 3.4 |
| 12.62 | 30.7 |
| 9.86 | 20.5 |
| 9.11 | 35.7 |
| 7.88 | 27.3 |
| 5.40 | 47.1 |
| 4.36 | 28.9 |
| 4.07 | 83.6 |
| 3.64 | 80.3 |
| 3.43 | 100 |
| 3.15 | 27.6 |
| Relative intensities are values relative to the intensity of the peak with d = 3.43 Å. | |

Example 5

A YFI-type zeolite obtained in the same manner as in Example 4 was acid-treated in the following manner. First, the YFI-type zeolite and 1.67 mass% hydrochloric acid were mixed by stirring at room temperature for 1 hour to give a zeolite slurry having a solid concentration of 15 mass%. The zeolite slurry obtained was filtered, and the residue was washed with a sufficient amount of pure water to give a YFI-type zeolite cake containing hydrogen ions and potassium.
The cake was subjected to the following alkali removal step. First, the cake was treated by passage of an aqueous ammonium chloride solution (20 mass%) having a mass five times that of the YFI-type zeolite contained in the cake and subsequently by passage of warm water having a mass ten times that of the YFI-type zeolite. The cake thus obtained was dried in the air atmosphere at 110°C for 20 hours to give a YFI-type zeolite of this Example. The YFI-type zeolite obtained was a YFI-type zeolite that had a $SiO_2/Al_2O_3$ ratio of 25.8 and an average crystal size of 0.49 $\mu$m and contained ammonium. The XRD pattern of the YFI-type zeolite of this Example had the following XRD peaks with a relative intensity of 3% or more.

[Table 11]

| Lattice spacings d (Å) | Relative intensities (%) |
|---|---|
| 15.77 | 4.8 |
| 12.62 | 41.0 |
| 9.86 | 27.6 |
| 9.11 | 51.8 |
| 7.88 | 33.7 |
| 5.39 | 41.3 |
| 4.35 | 27.8 |
| 4.06 | 80.6 |
| 3.63 | 77.0 |
| 3.43 | 100 |
| 3.15 | 25.8 |
| Relative intensities are values relative to the intensity of the peak with d = 3.43 Å. | |

Example 6

A YFI-type zeolite obtained in the same manner as in Example 5 was substituted by cesium in the following manner.

The YFI-type zeolite was mixed with water to form a slurry, which was then filtered to give a YFI-type zeolite cake. The cake obtained was treated by passage of a 2 mass% aqueous cesium chloride solution so that the amount of cesium would be 2 equivalents with respect to the aluminum contained in the YFI-type zeolite. This aqueous cesium chloride solution had been prepared by mixing cesium chloride ((special grade) manufactured by FUJIFILM Wako Pure Chemical Corporation) with pure water. Next, the cake was washed by passage of hot water having a mass ten times that of the YFI-type zeolite. The washed cake was dried in the air atmosphere at 110°C. In this manner, cesium (Cs) was supported on the YFI-type zeolite. The cesium-containing YFI-type zeolite was thus obtained as the zeolite of this Example.

The zeolite obtained was a YFI-type zeolite that had a $SiO_2/Al_2O_3$ ratio of 25.8, a $Cs_2O/Al_2O_3$ ratio of 1.1 and an average crystal size of 0.49 $\mu$m and contained cesium. The XRD pattern of the YFI-type zeolite had the following XRD peaks with a relative intensity of 3% or more.

[Table 12]

| Lattice spacings d (Å) | Relative intensities (%) |
|---|---|
| 15.71 | 4.8 |
| 12.58 | 24.4 |
| 9.84 | 12.1 |
| 9.09 | 10.8 |
| 7.88 | 17.0 |
| 5.39 | 47.0 |
| 4.35 | 31.5 |
| 4.05 | 82.8 |
| 3.63 | 91.2 |
| 3.43 | 100 |
| 3.14 | 27.8 |
| Relative intensities are values relative to the intensity of the peak with d = 3.43 Å. | |

Comparative Example 1

A YFI-type zeolite was produced by a method in accordance with Example 4 of Patent Document 1. Specifically, DMDPAOH, sodium hydroxide, potassium hydroxide and colloidal silica (Ludox AS-40, manufactured by Aldrich) were mixed together, and the mixture was stirred at 60°C for 3 hours and was cooled to give a zeolite precursor. The thus-obtained zeolite precursor as a silica source was mixed with a Y-type zeolite (HSZ-350HUA, manufactured by TOSOH CORPORATION) as an alumina source. A raw composition having the following molar ratios was thus obtained.

$SiO_2/Al_2O_3$ ratio = 40
$K/SiO_2$ ratio = 0.15
$M/SiO_2$ ratio = 0.15
$DMDPA^+/SiO_2$ ratio = 0.17
$H_2O/SiO_2$ ratio = 7.0
$OH/SiO_2$ ratio = 0.47

The raw composition was loaded into a hermetic container. While performing stirring at 20 rpm, the composition was hydrothermally treated at 160°C for 67 hours to give a crystallized product.

The resultant crystallized product was recovered by solid-liquid separation, washed with pure water, and dried at 110°C in the air atmosphere to give a zeolite product. The zeolite product was calcined at 550°C in the air atmosphere to give a zeolite of this Comparative Example.

The zeolite of this Comparative Example was a YFI-type zeolite that had a $SiO_2/Al_2O_3$ ratio of 18.0, a median size

of 7.0 μm, a standard deviation of 7.9 μm, a monomodal volume frequency particle size distribution curve, a mode particle size of 6.5 μm and an average crystal size of 0.74 μm. The XRD pattern of the YFI-type zeolite had the following XRD peaks with a relative intensity of 3% or more.

[Table 13]

| Lattice spacings d (Å) | Relative intensities (%) |
|---|---|
| 15.77 | 3.4 |
| 12.62 | 23.9 |
| 9.86 | 17.3 |
| 9.11 | 36.6 |
| 7.88 | 26.0 |
| 5.40 | 44.0 |
| 4.36 | 27.0 |
| 4.07 | 75.7 |
| 3.64 | 81.1 |
| 3.43 | 100 |
| 3.15 | 27.7 |
| Relative intensities are values relative to the intensity of the peak with d = 3.43 Å. | |

Measurement Example <Measurement of the viscosity of the zeolite slurries>

The YFI-type zeolites of Example 2, Example 4 and Comparative Example 1 were each mixed with pure water to give a zeolite slurry having a solid concentration of 30 mass%.

The viscosity of the zeolite slurries was measured with a parallel plate rheometer. The rheometer used was a rotary rheometer (device name: Twin-Drive Rheometer, MCR92, manufactured by Anton Paar GmbH). 2 mL of the sample slurry was dropped onto the stage of the measuring device equipped with a parallel plate measuring jig (PP50), and the viscosity of the zeolite slurry was measured at shear rates of $10 \ s^{-1}$, $100 \ s^{-1}$ and $1000 \ s^{-1}$. In the measurement, the stage temperature was 20°C and the gap between the measuring jig and the stage was 0.2 mm.

The results are described in the table below.

[Table 14]

| Shear rates ($s^{-1}$) | Viscosities (mPa s) | | |
|---|---|---|---|
| | Example 2 | Example 4 | Comparative Example 1 |
| 10 | 233 | 34 | 671 |
| 100 | 25 | 24 | 98 |
| 1000 | 3 | 6 | 26 |

The YFI-type zeolites of Examples were produced without requiring the synthesis of a zeolite precursor and therefore the production method of Examples was simplified compared to the production method of Comparative Example 1. Furthermore, from the above table, the zeolite slurries of Examples exhibited a lower viscosity than the YFI-type zeolite of Comparative Example 1 at all the shear rates of $10$ to $1000 \ s^{-1}$, and thus the YFI-type zeolites of Examples were shown to offer excellent slurry handling properties compared to the YFI-type zeolite of Comparative Example 1.

The entire contents of the description, the claims and the abstract of Japanese Patent Application No. 2022-14844 filed on February 2, 2022 are hereby cited and incorporated as a disclosure of the description of the present disclosure.

**Claims**

1. A YFI-type zeolite having at least the following powder X-ray diffraction peaks:

[Table 1]

| Lattice spacings d (Å) | Relative intensities (%) |
|---|---|
| 15.77±0.60 | 3 or more and 40 or less |
| 12.62±0.30 | 5 or more and 120 or less |
| 9.86±0.20 | 3 or more and 100 or less |
| 9.11±0.20 | 3 or more and 150 or less |
| 7.88±0.20 | 3 or more and 70 or less |
| 5.40±0.20 | 15 or more and 85 or less |
| 4.36±0.10 | 5 or more and 75 or less |
| 4.07±0.10 | More than 80 and 170 or less |
| 3.64±0.10 | 30 or more and 130 or less |
| 3.43±0.10 | 100 |
| 3.15±0.10 | 3 or more and 60 or less |
| Relative intensities are values relative to the intensity of the peak with d = 3.43±0.10 Å. | |

2. The YFI-type zeolite according to claim 1, which has a median size D50 in volume particle size distribution of 10 $\mu$m or more and 500 $\mu$m or less.

3. The YFI-type zeolite according to claim 1 or 2, which has a monomodal volume particle size distribution curve.

4. The YFI-type zeolite according to claim 3, wherein the volume particle size distribution curve has a standard deviation of 10 $\mu$m or more and 300 $\mu$m or less.

5. The YFI-type zeolite according to claim 1 or 2, wherein the molar ratio of silica to alumina is 8 or more and 5000 or less.

6. The YFI-type zeolite according to claim 1 or 2, which contains one or more cations selected from the group of hydrogen ion ($H^+$), sodium ($Na^+$), potassium ($K^+$), ammonium ($NH_4^+$) and cesium ($Cs^+$).

7. The YFI-type zeolite according to claim 1 or 2, which has an average crystal size of 0.10 $\mu$m or more and 0.70 $\mu$m or less.

8. A method for producing the YFI-type zeolite described in claim 1 or 2, the method comprising a step of crystallizing a composition comprising at least a silica source, an alumina source, an alkali source, an organic structure-directing agent and water, the alumina source being one or more selected from the group of aluminum hydroxide, aluminum oxide, aluminum sulfate, sodium aluminate, aluminum chloride and amorphous aluminosilicate.

9. The method for producing the YFI-type zeolite according to claim 8, wherein the silica source is at least one of amorphous silicic acid or amorphous aluminosilicate.

10. The method for producing the YFI-type zeolite according to claim 8, wherein the alumina source is at least one of aluminum sulfate or amorphous aluminosilicate.

# FIG. 1

## INTERNATIONAL SEARCH REPORT

| International application No. |
|---|
| **PCT/JP2023/003121** |

**A.    CLASSIFICATION OF SUBJECT MATTER**

***C01B 39/48*** (2006.01)i

FI:    C01B39/48

According to International Patent Classification (IPC) or to both national classification and IPC

**B.    FIELDS SEARCHED**

Minimum documentation searched (classification system followed by classification symbols)

C01B39/48

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

JSTPlus/JSTChina/JST7580 (JDreamIII)

**C.    DOCUMENTS CONSIDERED TO BE RELEVANT**

| Category* | Citation of document, with indication, where appropriate, of the relevant passages | Relevant to claim No. |
|---|---|---|
| X | WO 2018/061827 A1 (NATIONAL UNIVERSITY CORPORATION YOKOHAMA NATIONAL UNIVERSITY) 05 April 2018 (2018-04-05) paragraphs [0059]-[0104], fig. 2 | 1, 5, 6 |
| A | | 2-4, 7-10 |
| X | JP 2021-161022 A (TOSOH CORP.) 11 October 2021 (2021-10-11) claims, paragraphs [0028]-[0032], [0064]-[0090] | 1-10 |

☐ Further documents are listed in the continuation of Box C.    ☑ See patent family annex.

| | |
|---|---|
| *    Special categories of cited documents: | "T"  later document published after the international filing date or priority date and not in conflict with the application but cited to understand the principle or theory underlying the invention |
| "A"  document defining the general state of the art which is not considered to be of particular relevance | |
| "E"  earlier application or patent but published on or after the international filing date | "X"  document of particular relevance; the claimed invention cannot be considered novel or cannot be considered to involve an inventive step when the document is taken alone |
| "L"  document which may throw doubts on priority claim(s) or which is cited to establish the publication date of another citation or other special reason (as specified) | "Y"  document of particular relevance; the claimed invention cannot be considered to involve an inventive step when the document is combined with one or more other such documents, such combination being obvious to a person skilled in the art |
| "O"  document referring to an oral disclosure, use, exhibition or other means | |
| "P"  document published prior to the international filing date but later than the priority date claimed | "&"  document member of the same patent family |

| Date of the actual completion of the international search | Date of mailing of the international search report |
|---|---|
| **04 April 2023** | **18 April 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2023/003121**

| Patent document cited in search report | | | Publication date (day/month/year) | Patent family member(s) | | | Publication date (day/month/year) |
|---|---|---|---|---|---|---|---|
| WO | 2018/061827 | A1 | 05 April 2018 | (Family: none) | | | |
| JP | 2021-161022 | A | 11 October 2021 | WO | 2021/200990 | A1 | |
| | | | | CN | 115413247 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2018061827 A

- JP 2022014844 A